**Europäisches Patentamt**

**European Patent Office**

**Office européen des brevets**

(11) Veröffentlichungsnummer: **0 143 894 B1**

# EUROPÄISCHE PATENTSCHRIFT

(45) Veröffentlichungstag der Patentschrift: **02.05.91**

(51) Int. Cl.⁵: **B29C 47/82**, B29B 7/82

(21) Anmeldenummer: **84109569.8**

(22) Anmeldetag: **10.08.84**

(54) **Verfahren zur Durchführung von chemischen Reaktionen, insbesondere zur Herstellung von Kunststoffen mit Hilfe von Extrudern und Anlage hierzu.**

(30) Priorität: **04.10.83 DE 3335954**

(43) Veröffentlichungstag der Anmeldung:
**12.06.85 Patentblatt 85/24**

(45) Bekanntmachung des Hinweises auf die
Patenterteilung:
**02.05.91 Patentblatt 91/18**

(84) Benannte Vertragsstaaten:
**AT BE CH DE FR GB IT LI LU NL SE**

(56) Entgegenhaltungen:
DE-A- 2 166 789     DE-A- 2 654 774
DE-A- 3 308 138     FR-A- 1 379 328
US-A- 2 693 348     US-A- 3 727 678
US-A- 3 744 770     US-A- 4 272 466

H. Herrmann "Schneckenmaschinen in der
Verfahrenstechnik", Springer Verlag, 1972, S.
32-48

(73) Patentinhaber: **RB Kunststoffpatent-
Verwertungs AG
Westbahnhofstrasse 11
CH-4500 Solothurn(CH)**

(72) Erfinder: **Belzm Roland Karl
Sonnenhalde 31
W-7022 Leinfelden-Echterdingen(DE)**

(74) Vertreter: **Patentanwälte Ruff und Beier
Neckarstrasse 50
W-7000 Stuttgart 1(DE)**

## Beschreibung

Die Erfindung betrifft ein Verfahren zur Herstellung von Kunststoffen mit Hilfe von Extrudern sowie eine Anlage zur Durchführung dieses Verfahrens.

Extruder zur Verarbeitung von Kunststoffen benötigen im Betrieb relativ viel Energie, wobei die gewünschte genaue Temperaturführung häufig nicht möglich ist, selbst dann nicht, wenn die Extruder mit einer elektrischen Beheizung sowie mit Kühlschlangen für eine Kühlflüssigkeit ausgerüstet sind. Es ist auch schon vorgeschlagen worden, auf Extrudern thermoplastische Kunststoffe herzustellen. So geht aus den Seiten 32 bis 48 der Monographie von H. Herrmann "Schneckenmaschinen in der Verfahrenstechnik", Springerverlag 1972 hervor, daß polymerisierbare, äthylenisch ungesättigte Verbindungen in einem Reaktionsrohr mit Zwangsförderung unter Einwirkung von Scherkräften bei gleichzeitiger Entgasung polymerisiert werden können. Als solches Reaktionsrohr mit Zwangsförderung kann eine ineinandergreifende Doppelschneckenmaschine verwendetwerden (vgl. Seite 35, zweitletzter Absatz). Diese Herstellungsart konnte sich wegen der dabei aufgetretenen Schwierigkeiten bisher nicht durchsetzen. Es besteht aber ein Bedürfnis, flexibel einsetzbare und für verschiedene chemische Reaktionen verwendbare Reaktoren zur Verfügung zu haben, die für die Produktion von kleineren bis mittleren Produktmengen ausgelegt und mit geringem Aufwand umrüstbar sind.

Dementsprechend liegt der Erfindung die Aufgabe zugrunde, ein Verfahren zur Herstellung von Kunststoffen mit Hilfe von Extrudern und hierzu geeignete Anlagen zu schaffen, die die gezielte Durchführung der Herstellung von thermoplastischen Kunststoffen ermöglichen.

Gemäß der Erfindung wird diese Aufgabe gelöst durch ein Verfahren zur Herstellung von thermoplastischen Kunststoffen durch Polymerisation von Monomeren mit Hilfe von Extrudern, bei dem die Transportstrecke der Extruder in verschiedene, vorzugsweise mindestens fünf, Temperaturzonen unterteilt wird, und die Temperaturen in diesen Zonen individuell und unabhängig voneinander eingestellt werden, wobei nach im wesentlichen beendeter Reaktion an mindestens einer Stelle entlang der Reaktionsstrecke flüchtige Bestandteile, insbesondere nicht umgesetzte Monomere, aus der Reaktionsmischung abgezogen werden, das dadurch gekennzeichnet ist, daß der Transportstrecke im Extruder ein vorbestimmtes Temperaturprofil aufgezwungen wird, die beim Durchlaufen der Transportstrecke stattfindende Polymerisation in bestimmte Zonen lokalisiert wird, zwei hintereinander geschaltete Extruder vorgesehen sind, die Polymerisation im ersten, dem Reaktionsextruder, durchgeführt wird, die Polymerschmelze über eine stauende Fördereinrichtung in den zweiten Extruder gefördert wird, eine Destillation zum Abzug flüchtiger Bestandteile am Anfang des zweiten Extruders durchgeführt wird und das erhaltene Polymerisat ohne Unterbrechung des Arbeitsprozesses am Ende des zweiten Extruders extrudiert wird.

Durch die Erfindung wird eine sehr feinfühlige Temperaturführung für den Extruder geschaffen, die es ermöglicht, genaue Temperaturgrenzen einzuhalten. Hierzu wird die Transportstrecke des Extruders in verschiedene Temperaturzonen unterteilt, wobei die Temperatur in diesen Zonen individuell und unabhängig voneinander eingestellt wird. Es sind vorteilhafterweise mindestens fünf Temperaturzonen vorgesehen und in der Regel fünf bis fünfzehn und mehr Zonen, wobei ca. zehn Zonen pro Extruder bevorzugt sind. Die Anzahl der Zonen hängt im wesentlichen von der Temperaturempfindlichkeit einer durchzuführenden Reaktion ab. Es wird der Transportstrecke im Extruder ein vorbestimmtes Temperaturprofil aufgezwungen, wodurch erreicht wird, daß beim Durchlaufen der Transportstrecke stattfindende chemische Reaktionen trotz der kontinuierlichen Förderung des Materials auf bestimmte Zonen lokalisiert werden. Dadurch ist es möglich, mit einer Anlage verschiedenartige chemische Reaktionen durchzuführen, wobei der Verfahrensablauf vorzugsweise vollautomatisch gesteuert wird. Hierzu können die einzelnen Verfahrensparameter für jede einzelne Reaktion in einem Programm vorgegeben werden, das mit Hilfe eines gleichartigen Extruders über einen Rechner erstellt wurde. Mit einer solchen Anlage können beispielsweise Produktionsmengen in der Größenordnung von 10 bis 20.000 Jahrestonnen hergestellt werden. Vorteilhafte Ausführungsformen ergeben sich aus den Unteransprüchen.

Bei einer bevorzugten Ausführungsform der Erfindung wird die Temperierung der Temperaturzonen ausschließlich mit Hilfe von Fluiden, insbesondere Flüssigkeiten, vorgenommen, die die Temperaturzonen durchströmen. Durch den Verzicht auf eine elektrische Beheizung kann der Extruder so explosionsgesichertausgebildet werden, was bevorzugt ist. Außerdem kann die erfindungsgemäße Temperierung sehr feinfühlig durchgeführt werden, so daß Temperaturtoleranzen unter 1 $^\circ$C und sogar bis 0,1 $^\circ$C eingehalten werden können. Hierzu wird vorzugsweise eine Mischung von zwei Fluiden gleicher Art, aber unterschiedlicher Temperatur in der Weise vorgenommen, daß das in die Temperaturzone eintretende Fluid zur Aufrechterhaltung der gewünschten Temperatur Wärmemengen aufzunehmen oder abzugeben vermag, und zwar bei möglichst geringen Temperaturdifferenzen. So kann die Temperaturdifferenz $\Delta$ t zwischen Fluideintritt und Fluidaustritt der Temperaturzone in Abhängigkeit von der Empfindlichkeit der Reaktion unter 3 °C und sogar unter 1 °C gehalten werden. Die Flinkheit der Temperierung wird dadurch verbessert, daß die Mischung der Fluide unmittelbar vor der jeweiligen Temperaturzone erfolgt. Vorzugsweise weicht die Temperatur eines Fluids weniger als 5 °C, vorzugsweise weniger als 3 °C von der Solltemperatur der entsprechenden Temperaturzone ab, wogegen die Temperatur des anderen Fluids mit Vorteil weiter davon entfernt liegen kann. Unterstützt werden kann dies noch dadurch, daß auch die Menge des die jeweilige Zone durchströmenden Fluids verändert wird. Auch kann die Verweildauer der Reaktionspartner in den einzelnen Temperaturzonen verschieden gehalten werden, wobei sie in Zonen mit hohem erforderlichem Wärmeaustausch vorzugsweise geringer ist, wodurch erreicht wird, daß die pro Zeiteinheit benetzte Fläche zwischen dem zu behandelnden Material und dem Extruder vergrößert wird. Durch derartige Maßnahmen ist es möglich, die chemische Reaktion bei Polymerisationsvorgängen so genau zu steuern, daß ein Einfluß auf die Größe des Molekulargewichts der Polymeren genommen werden kann. So können beispielsweise durch Kühlung Reaktionen verhindert werden, bis eine ausreichende Durchmischung der Reaktionspartner erzielt ist und dann sehr schnell und kontrolliert gestartet werden, indem nach der anfänglichen Kühlung eine schnelle Erhitzung auf die gewünschte Solltemperatur vorgenommen wird.

Mit dem Extruder können auch unter hohem Druck oder unter Vakuum ablaufende Reaktionen durchgeführt werden, wenn der Extruder druckdicht ausgebildet ist. Außerdem sind die Schnecken des Extruders vorzugsweise mit verschiedenen Geschwindigkeiten antreibbar. Sollte wider Erwarten eine Reaktion zu heftig ablaufen, dann kann wiederum programmgesteuert durch Einlegen eines Schnellganges eine schnelle Austragung des Materials und somit eine Selbstreinigung des Extruders vorgenommen werden.

Nach dem erfindungsgemäßen Verfahren können sowohl einphasige als auch mehrphasige Reaktionen durchgeführt werden. Dabei ist es möglich, Teile der Reaktionsmischung bzw. des Reaktionsmediums abzutrennen, bevor das gewünschte Produkt den Extruder verläßt. Flüchtige Bestandteile werden aus der Reaktionsmischung durch eine Destillation abgetrennt. Eine solche Destillation kann bei Umgebungsdruck durchgeführt werden. Es ist aber auch eine Vakuumdestillation möglich, wobei dann vorteilhafterweise, falls erforderlich, durch einen Druckstau an einer Stelle der Transportstrecke, die vor der Destillationsstelle liegt, verhindert wird, daß flüchtige Reaktionspartner aus dem noch nicht zur Reaktion gekommenen Reaktionsmedium abgezogen werden. Ein solcher Rückstau bzw. eine solche Drosselung kann auf verschiedene Art und Weise erzielt werden, beispielsweise, indem die Schnecken des Extruders mit nichtfördernden bzw. gegenfördernden Elementen versehen sind. Es ist auch möglich, daß die Austragdüse des ersten Extruders die Drosseleinrichtung vor der im nachfolgenden Extruder angeordneten Destillationseinrichtung bildet. Im Gegensatz zu den üblichen Entgasungseinrichtungen, die lediglich zu einem kleinen Prozentsatz mitgeführte flüchtige Stoffe entfernen, können durch derartige Destillationseinrichtungen Lösungsmittel oder bei der Reaktion in stöchiometrischer Menge entstandene flüchtige Reaktionsprodukte abgezogen werden.

Weiterhin können dem die Transportstrecke durchlaufenden Reaktionsmedium in jeder Zone weitere Reaktionspartner zugefügt werden, z.B. Starter, Beschleuniger oder solche Reaktionspartner, die anteilweise zugegeben werden. Hierzu können im Extruder geeignete Zudosierungsöffnungen vorgesehen sein. Durch geeignete Kombination dieser zahlreichen Variationsmöglichkeiten ergibt sich die vielseitige Einsatzmöglichkeit des erfindungsgemäßen Verfahrens und der hierzu vorgesehenen Anlage zur Herstellung unterschiedlicher Kunststoffe, ohne daß wesentliche Umbauten am Extruder vorzunehmen sind. In der Regel sind nicht einmal Veränderungen an der bzw. den Schnecken erforderlich, solche können jedoch durch Austausch der einzelnen Schneckenelemente ohne Schwierigkeiten vorgenommen werden. Unabhängig davon können der Zugabebeginn, die Menge und das Mischungsverhältnis der Reaktionspartner, das Temperaturprofil der Transportstrecke, der Druck und/oder die Schneckendrehzahl in Abhängigkeit von der gewünschten Reaktion programmgesteuert vorgegeben werden, wodurch eine große Variationsbreite von durchführbaren Reaktionen erhalten wird. So ist es mit besonderem Vorteil möglich, die variablen Daten der Arbeits- bzw. Reaktionsbedingungen auf einer Datenbank zu speichern und in Abhängigkeit von den gewünschten Eigenschaften der Endprodukte abzurufen, wodurch sich eine universelle Einsatzmöglichkeit ergibt. Demgegenüber sind die bisher bekannten, zur Durchführung von chemischen Reaktionen bestimmten Extruder auf ganz bestimmte Reaktionen ausgelegt und daher in ihrer Einsatzmöglichkeit stark beschränkt.

Gegenstand der Erfindung ist weiterhin eine Anlage zur Durchführung des Verfahrens nach einem der vorhergehenden Ansprüche, mit mindestens einem Mehrschneckenextruder mit einem aus mehreren Schüssen bestehenden Gehäuse und einem Antrieb für die Schnecken, wobei wenigstens einige Schüsse mit einem Einlaß und einem Auslaß versehene Fluidkanäle aufweisen und mit voneinander unabhängigen Temperiereinrichtungen ausgerüstet sind und an mindestens einer Stelle eine Abzugseinrichtung für flüchtige Bestandteile vorgesehen ist, die dadurch gekennzeichnet ist, daß sie zwei kaskadenförmig hintereinander geschaltete Extruder aufweist, von denen der erste als Reaktionsextruder zur Durchführung der Polymerisation und der zweite als Entgasungs- und Compoundierungsextruder eingerichtet ist, die beiden Extruder über eine mit einer stauenden Fördereinrichtung versehene Leitung verbunden sind, am Anfang des Compoundierungsextruders eine Destillationseinrichtung vorgesehen ist.

Die erfindungsgemäße Anlage zur Durchführung des Verfahrens weist mit Vorteil Mehrschnecken-Extruder mit jeweils mindestens fünf Gehäuseschüssen auf, die jeweils für sich, d.h. unabhängig voneinander temperierbar sind. Die einzelnen Gehäuseschüsse entsprechen somit im wesentlichen den Temperaturzonen und sind jeweils mit eigenen Temperierungseinrichtungen ausgerüstet.

Der Extruder kann in seiner Größe innerhalb von weiten Grenzen variieren, so z.B. einen Bohrungsdurchmesser von 30 bis 120 mm oder mehr haben, wobei die kleineren mehr für Versuchszwecke und die größeren für Produktionszwecke geeignet sind. In der Regel entspricht die Länge eines Schusses etwa dem fünffachen Bohrungsdurchmesser, wobei hier jedoch innerhalb weiter Grenzen variiert werden kann. Normalerweise sind zwischen 5 und 15 Schüsse vorgesehen. Die Extruder können feste, flüssige oder auch gasförmige Ausgangsstoffe verarbeiten.

Die Erfindung schlägt weiterhin vor, daß zwei Schnecken in gleicher Drehrichtung rotieren können. Dies ist eine Maßnahme, die aufgrund der Möglichkeit des dichten Kämmens das gute Durchmischen von Kunststoffen wesentlich verbessert.

In Weiterbildung kann vorgesehen sein, daß die Schnecken dreigängig sind. Es hat sich herausgestellt, daß dies die optimale Anzahl von Gängen bei Extruderschnecken ist.

Um auch die Verweilzeit der Kunststoffe in den einzelnen Temperaturbereichen verändern zu können, kann nach einem weiteren Merkmal der Erfindung vorgesehen sein, daß die Schnecken eine sich über ihre Länge ändernde Steigung aufweisen.

Erfindungsgemäß kann weiterhin vorgesehen sein, daß mindestens ein, vorzugsweise jeder Gehäuseschuß eine zusätzliche Öffnung aufweist. Damit wird die Möglichkeit gegeben, einen weiteren Zusatzstoff in den Extruder an einer bestimmten Stelle einzubringen, Druckmeßeinrichtungen anzuschließen und/oder Teile des Reaktionsmediums abzutrennen.

Es kann ebenfalls vorgesehen sein, daß mindestens ein Gehäuseschuß eine Entgasungsöffnung aufweist. Hier können gasförmige Stoffe abgezogen werden, falls dies entsprechend den gewünschten Eigenschaften erwünscht ist. Die Anlage weist mindestens eine Destillationseinrichtung, vorzugsweise eine Vakuumdestillationseinrichtung, auf, die an eine Öffnung eines Gehäuseschusses angeschlossen ist, um größere Mengen an flüchtigen Stoffen abtrennen zu können. Der für die Destillation vorgesehene Druck bzw. Unterdruck kann einstellbar gehalten werden, wozu der Extruder vor der Destillationseinrichtung vorzugsweise eine Drossel aufweist. Auch wird die Temperatur in der Destillationszone mit Vorteil höher gehalten als in den übrigen Zonen, um den Dampfdruck der flüchtigen Stoffe zu erhöhen.

Um ein möglichst exaktes Temperaturprofil des Extruders zu ermöglichen, kann, wie bereits erwähnt, zur Temperierung ein Wärmeträgerfluid vorgesehen sein, dessen Temperatur durch Mischung aus Fluid mit zwei unterschiedlichen Temperaturen veränderbar ist. Die beiden unterschiedlichen Temperaturen, aus denen die gewünschte Temperatur zusammengemischt wird, sind so gewählt, daß die Solltemperatur immer bei oder zwischen diesen beiden Werten liegt. Als Wärmeträgerfluid wird vorzugsweise eine Flüssigkeit verwendet, die bei beiden Temperaturen noch eine ausreichende Viskosität und Stabilität besitzt. Hier eignen sich Thermoöle, die beispielsweise im Bereich von 50 $^\circ$ C bis 200 $^\circ$ C oder mehr einsetzbar sind, für niedrige Temperaturbereiche auch Wasser.

Bei der Temperierung kann mit Hilfe einer entsprechenden Steuerung vorgesehen sein, daß die Temperaturdifferenz zwischen dem Fluid am Einlaß und dem Fluid am Auslaß einen bestimmten Wert nicht überschreitet, so daß innerhalb des Gehäuseschusses die Temperaturunterschiede nicht zu groß werden. Die Erfindung schlägt ebenfalls vor, daß zusätzliche oder alternativ zur Veränderung der Temperatur des Fluides die Menge des den Gehäuseschuß durchströmenden Fluids veränderbar ist. Dies ist insbesondere dann von Nutzen, wenn man nur eine geringe Temperaturdifferenz zwischen Einlaß- und Auslaßfluid zuläßt, um innerhalb des Gehäuseschusses keine zu hohen Temperaturdifferenzen auftreten zu lassen. In diesem Falle kann man die Menge des durchströmenden Fluids vergrößern.

Um eine besonders exakte und schnelle Regelung der Temperatur zu ermöglichen, kann erfindungsgemäß vorgesehen sein, daß die Mischung des Fluids unmittelbar vor dem Eintritt des Fluids in den Gehäuseschuß erfolgt.

Zur Herstellung der Mischung von Fluid aus zwei Temperaturen kann erfindungsgemäß für jeden Gehäuseschuß mindestens ein Servoventil mit einem vorzugsweise kontinuierlich veränderbaren Mischungsverhältnis vorgesehen sein. Dabei sind unterschiedliche Ventilarten verwendbar. Um das richtige Mischungsverhältnis einzustellen, kann in Weiterbildung vorgesehen sein, daß das Servoventil von mindestens einem Temperaturfühler über eine elektronische Steuerung zur Regelung der Temperatur in dem Gehäuseschuß beeinflußbar ist. Es gibt mehrere Möglichkeiten der Anbringung des Temperaturfühlers, wobei es selbstverständlich auch möglich ist, daß man mehr als einen Temperaturfühler gleichzeitig vorsieht. Dabei kann es entweder möglich sein, zwischen den einzelnen Temperaturfühlern umzuschalten, oder aber eine Kombination von Meßwerten mehrerer Temperaturfühler als Eingangsgröße für die elektronische Steuerung zu verwenden.

Die Erfindung schlägt vor, daß ein Temperaturfühler zur Messung der Temperatur des Gehäuseschusses, vorzugsweise in geringem Abstand von der von den Schnecken durchsetzten Innenbohrung angeordnet ist. Da die Gehäuseschüsse aus Metall bestehen, kann auf diese Art eine recht gute Abfühlung der Temperatur vorgenommen werden. Es ist jedoch ebenfalls mit Vorteil möglich, daß ein Temperaturfühler zur Messung der Fluidtemperatur am Einlaß in dem Gehäuseschuß angeordnet ist. Diese Möglichkeit ist insbesondere dann wertvoll, wenn man, wie von der Erfindung ebenfalls vorgeschlagen wird, einen Temperaturfühler zur Messung der Fluidtemperatur am Auslaß aus dem Gehäuseschuß anordnet. Mit Hilfe dieser beiden Temperaturfühler läßt sich dafür sorgen, daß die Temperaturdifferenz zwischen dem Einlaß und dem Auslaß aus dem Gehäuseschuß nicht zu groß wird. Darüber hinaus läßt sich aus der Differenz der Meßwerte feststellen, ob in diesem Gehäuseschuß eine endotherme oder eine exotherme Reaktion vorliegt, oder ob sich die Temperatur in diesem Gehäuseschuß selbst stabilisiert. In diesem Fall wäre beispielsweise in dem entsprechenden Gehäuseschuß weder eine Kühlung noch eine Erwärmung erforderlich.

Eine weitere besondere günstige Möglichkeit der Anordnung eines Temperaturfühlers ist dann gegeben, wenn dieser zur Messung der Temperatur der Schmelze in dem Extruder angeordnet ist. Da die Gänge der Schnecke mit geringem Abstand von der Gehäusewandung vorbeistreichen, ist es immerhin doch möglich, beispielsweise in den zwischen den beiden Schnecken gebildeten Zwickel einen Temperaturfühler so weit in das Innere des Gehäuses hineinragen zu lassen, daß er von der Schmelze, aber nicht von den Schnecken berührt wird. Dieser Temperaturfühler mißt dann exakt die Temperatur des im Extruderschuß vorhandenen Kunststoffes, wobei auch hier aus den Temperaturunterschieden zwischen dem Kunststoff und dem Gehäuse Rückschlüsse gezogen werden können.

Die Art des von der Erfindung vorgeschlagenen Servoventils läßt sich auf unterschiedliche Möglichkeiten verwirklichen. Eine besonders günstige Möglichkeit ist dann gegeben, wenn das Servoventil ein Dreiwegeventil mit zwei Einlässen und einem Auslaß ist, wobei an jedem Einlaß je eine Abzweigung eines Fluidkreislaufs anliegt, von denen beide unterschiedlich hohe Temperaturen aufweisen. Dies bedeutet, daß an dem einen Eingang des Dreiwegeventils ein Fluidkreislauf mit der niedrigst nötigen Temperatur anliegt, während am anderen Einlaß ein Fluidkreislauf mit der höchsten notwendigen Temperatur anliegt. Aus beiden Temperaturwerten kann je nach Stellung des Servoventils eine Auslaßtemperatur gemischt werden, die zwischen den beiden Extremwerten liegt und im Schuß die gewünschte Temperatur ergibt. Besonders günstig ist es dabei, wenn beide Kreisläufe je einen Nebenschluß und eine Pumpe aufweisen. Es kann beispielsweise nötig sein, den gesamten Extruder nur zu kühlen, so daß plötzlich alle Ventile nur das Fluid mit der niedrigeren Temperatur durchlassen. Damit nicht für diesen Betriebszustand ein eigener Fühler vorhanden sein muß, der die Pumpe des Kreislaufs mit der höheren Temperatur abschaltet, ist der Nebenschluß vorgesehen. Dies macht es auch möglich, daß die Pumpe mit einer relativ großen Förderleistung arbeitet, so daß an den Einlässen der Ventile aller Gehäuseschüsse die gleichen Druckverhältnisse und damit die gleichen Regelungscharakteristika des jeweiligen Ventils vorliegen.

Die Erfindung schlägt weiterhin vor, daß mindestens ein, vorzugsweise beide Kreisläufe eine vorzugsweise elektrische Beheizung mit einer Temperaturregelung und der Kreislauf für die niedrigere Temperatur einen Wärmetauscher zur Abkühlung aufweisen können. Die Beheizungen bzw. die Kühlung sind erforderlich, damit gewährleistet ist, daß die beiden Fluidkreisläufe tatsächlich Fluid mit einer festen vorbestimmten Temperatur liefern, so daß damit dann eine Mischung auf exakte Temperatur durchgeführt werden kann.

Die Erfindung schlägt weiterhin vor, daß die Auslässe mehrerer Gehäuseschüsse mit Ausnahme des ersten, der vorzugsweise wassergekühlt ist, in gemeinsame Rückleitungen münden, die ggf. durch Ventile in zwei Teile unterschiedlich bevorzugter Temperatur aufteilbar sind, wobei der Teil höherer bzw. tieferer Temperatur mit dem Rücklauf des Kreislaufs mit höherer bzw. tieferer Temperatur verbunden ist. Dies macht es beispielsweise möglich, falls bei dem einzustellenden Wärmeprofil tatsächlich zwei Teile mit deutlich getrennter Temperatur vorgesehen sind, daß der Kreislauf für das Öl mit höherer Temperatur bevorzugt von Öl mit höherer Temperatur beliefert wird. Zum Ausgleich der Rücklaufmengen im Verhältnis zu den Vorlaufmengen sind vorzugsweise Querverbindungen vorhanden.

Die Erfindung schlägt in Weiterbildung vor, daß zur Temperierung des Gehäuseschusses mindestens ein Teil des den Gehäuseschuß verlassenden Fluids rückführbar ist. Zur Rückführung kann eine Pumpe vorgesehen sein, wobei die Rückführung ebenfalls wieder mit Hilfe eines Ventiles gesteuert werden kann. Dieser von der Erfindung vorgeschlagenen Maßnahme liegt der Gedanke zugrunde, daß im Regelfall die Temperatur des den Gehäuseschuß verlassenden Fluids zwischen den beiden Extremtemperaturen liegt, so daß entweder eine Mischung des zurückgeführten Fluids mit dem Fluid niedrigerer Temperatur oder mit dem Fluid höherer Temperatur zur Temperierung des Gehäuseschusses ausreicht, was zu einer deutlichen Energieersparnis führt. Diese Möglichkeit der Rückführung läßt sich auch mit einfacheren Ventilen durchführen, z.B. durch zwei oder drei Zweiwegeventile pro Schuß. Ebenfalls durchführen läßt sich diese Art der Temperierung mit zwei Dreiwegeventilen oder einem Vierwegeventil. Ebenfalls denkbar ist es, eine gesteuerte Pumpe vorzusehen, so daß das Mischungsverhältnis durch die Förderleistung der Pumpe reguliert wird. Für den Extremfall, d.h. beispielsweise eine vollständige Kühlung aller Temperaturschüsse, kann auch hier vorgesehen sein, daß die Pumpe ausschaltbar ist.

Zur Energieeinsparung wird weiterhin auch bei anderen Nebenschlüssen oder Bypass-Einrichtungen darauf geachtet, daß Rück- bzw. Nebenströme mit den Extremtemperaturen mit auf gleichem Temperaturniveau stehenden Strömen vereinigt werden, also in der Regel an der Ausgangsseite der Kühl- bzw. Heizeinrichtungen, da auf diese Weise der Wärmeaustausch auf kleinere Flüssigkeitsvolumina beschränkt werden kann, bei etwas höherer Temperaturdifferenz, was günstiger ist, als umgekehrt.

Die Mischung der Reaktionspartner kann in der bzw. den ersten Zonen des Extruders erfolgen. Vorzugsweise werden mindestens zwei Reaktionspartner vor Eintritt in den Extruder ggf. unter Kühlung miteinander vermischt. Weiterhin ist vorzugsweise mindestens eine Dosiereinrichtung mit veränderbarer Dosiermenge vorgesehen, wobei insbesondere mindestens zwei Dosierpumpen mit einstellbarem Hub vorgesehen sind, die einen gemeinsamen regelbaren Antrieb besitzen. Diese Variablen können ebenfalls programmgesteuert veränderbar sein, ebenso wie ein etwaiger Aufgabedruck, mit dem die Ausgangsprodukte in den Extrudern eingepumpt werden.

Das erfindungsgemäße Verfahren und die erfindungsgemäße Anlage eignen sich besonders zur Herstellung von thermoplastischen Kunststoffen, insbesondere solchen, wie sie zur Herstellung von Verbundfolien bzw. Verbundplatten geeignet sind, die von einer Seite her wasserfest und von der anderen Seite her wasserlöslich sind. Derartige Folien bzw. Platten sind beispielsweise in den europäischen Offenlegungsschriften 32 244, 69 296 und 78 553 beschrieben. Dabei handelt es sich um Verbundmaterialien aus mindestens zwei Schichten, wobei eine Schicht in Wasser an sich unlöslich, aber in saurem oder basischem Medium löslich ist und die andere Schicht in Wasser löslich bzw. lösbar ist und einen sauren oder basischen Lösungsvermittler für die in Wasser an sich unlösliche Schicht enthält. Die Herstellung der thermoplastischen Kunststoffe und ihre Verarbeitung kann dabei in hintereinander und ggf. parallel geschalteten Extrudern erfolgen, wobei die bei der Herstellung freiwerdende Reaktionswärme auch zum Aufschmelzen von Ausgangsmaterialien bzw. Endprodukten in demselben oder einem anderen Extruder wieder eingesetzt werden kann.

Die Funktionsweise der Temperierung ergibt sich aus der folgenden Beschreibung eines Extruders mit Temperiereinrichtungen sowie anhand der Zeichnung. Hierbei zeigen:

Fig. 1 eine schematische Darstellung eines Extruders mit Fluidkreisläufen zur unabhängigen Steuerung der Temperatur jedes Gehäuseschusses;

Fig. 2 eine andere Möglichkeit der genauen Temperierung eines Gehäuseschusses;

Fig. 3 eine dritte Ausführungsform der Temperierung eines Gehäuseschusses;

Fig. 4 eine weitere Möglichkeit der Temperierung mit Hilfe zweier Dreiwegeventile;

Fig. 5 eine Möglichkeit der Temperierung mittels eines Vierwegeventils;

Fig. 6 schematisch einen Querschnitt durch den Extruder mit schematisch angegebener Anordnung der Temperaturfühler.

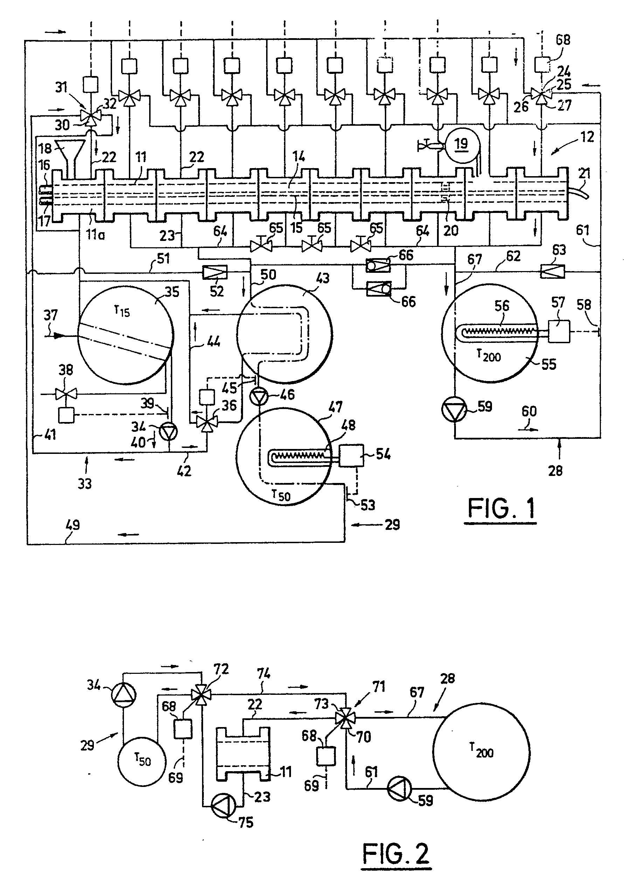

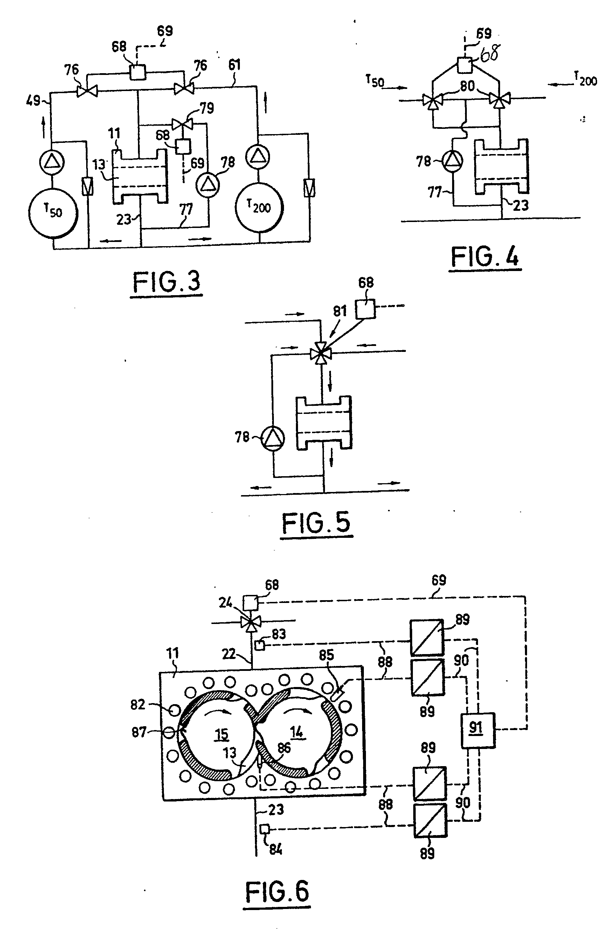

In Fig. 1 ist schematisch ein aus zehn Gehäuseschüssen 11 bestehender Extruder 12 dargestellt. Der Extruder 12 besitzt eine durchgehende Längsbohrung in der Form zweier sich teilweise durchsetzender Kreiszylinder, wie aus Fig. 6 ersichtlich ist. In der Gehäusebohrung 13 sind zwei Schnecken 14, 15 angeordnet, deren Antriebsenden 16, 17 aus der linken Seite des Extruders 12 herausragen. Sie werden dort von einem Drehantrieb angetrieben, wobei im Ausführungsbeispiel die beiden dichtkämmenden Schnecken 14, 15 im gleichen Drehsinn rotieren, siehe hierzu auch Fig. 6. Der Extruder dient insbesondere zur Herstellung von Kunststoffen, z.B. durch Substanz-Polymerisation.

Die Förderrichtung der beiden Schnecken 14, 15 bei dem in Fig. 1 dargestellten Extruder 12 ist von links nach rechts, so daß der in Fig. 1 am linken Ende angeordnete Gehäuseschuß 11a einen schematisch dargestellten Einfülltrichter 18 bzw. Einfüllstutzen zum Einfüllen von Kunststoff bzw. von Monomeren aufweist. Es können selbstverständlich auch zwei oder mehrere Einfüllöffnungen zum Einfüllen verschiedener Komponenten vorhanden sein. Wenn in dem in Förderrichtung am Anfang liegenden Gehäuseschuß 11a keine Reaktion, sondern eine Vermischung stattfindet und eine Reaktion verhindert werden soll, erfolgt in diesem Gehäuseschuß nur eine Kühlung. Zu diesem Zweck ist ein eigener Kreislauf vorgesehen, der im folgenden noch erläutert wird. Alle übrigen Gehäuseschüsse 11 sind im wesentlichen gleich ausgebildet, sie sind miteinander verschraubt und bilden eine durchgehende Einheit. Der neunte Gehäuseschuß (zweiter von rechts in Fig. 1) steht mit einer Destillationseinrichtung 19 in Verbindung, an die ein Unterdruck angelegt werden kann, so daß diesem zweitletzten Gehäuseschuß flüchtige Bestandteile entzogen werden können. Eine Drosseleinrichtung 20 im achten Gehäuseschuß verhindert, daß durch den Unterdruck noch nicht umgesetzte Monomere aus den vorhergehenden Schüssen abgezogen werden. Am rechten Ende des Extruders 12 ist eine Austrittsdüse 21 für das Endprodukt angeordnet.

In Fig. 1 sind die Fluid- bzw. Wärmeträgermittelkreisläufe mit ausgezogenen Linien dargestellt, wobei die gestrichelt angedeuteten Leitungen Steuerleitungen sind.

Jeder Gehäuseschuß 11 enthält (in Fig. 1) oben einen Einlaß 22 und (in Fig. 1) an seiner Unterseite einen Auslaß 23 für das Wärmeträgerfluid. Unmittelbar vor dem Einlaß 22 jedes Gehäuseschusses 11 ist ein servobetätigtes Dreiwegeventil 24 angeordnet, das jeweils zwei Einlaßseiten 25, 26 und einen Auslaß 27 aufweist. Die Auslaßseite 27 jedes Dreiwegeventils 24 ist jeweils mit dem Einlaß 22 des Gehäuseschusses 11 verbunden, während jeweils ein Einlaß 25 mit einem Fluidikkreislauf 28 höherer Temperatur und jeweils der Einlaß 26 mit einem zweiten Fluidikkreislauf 29 für ein Wärmeträgerfluid mit niedrigerer Temperatur verbunden ist. Dies gilt für alle Gehäuseschüsse 11 mit Ausnahme des in Transportrichtung ersten Gehäuseschusses 11a, bei dem der Einlaß 22 zwar auch mit dem Auslaß 30 eines Dreiwegeventils 31 verbunden ist, das jedoch einen zweiten Auslaß 32 aufweist.

Von dem Fluidikkreislauf 28 sei angenommen, daß er ein Wärmeträgeröl mit einer konstanten Temperatur von beispielsweise 200 °C liefert, während der Fluidikkreislauf 29 das gleiche Wärmeträgerfluid mit der Temperatur von beispielsweise 50 °C liefert.

Für den ersten Gehäuseschuß 11a ist ein dritter Fluidikkreislauf 33 vorgesehen, der beispielsweise wassergefüllt ist und eine Temperatur von 15 °C aufweisen kann. Der Fluidikkreislauf 33 enthält eine Pumpe 34, einen Wärmetauscher 35, sowie neben dem Dreiwegeventil 31 ein zweites Dreiwegeventil 36. Der Wärmetauscher 35 ist vorgesehen, um die Temperatur des Wassers auf exakt 15 °C zu halten, wozu eine Leitung 37 für ein Kühlmittel vorgesehen ist, das in Pfeilrichtung in den Wärmetauscher 35 einströmen kann. Sein Durchfluß wird mit Hilfe des Ventiles 38 geregelt, das von der Temperatur des aus dem Wärmetauscher 35 austretenden Wassers durch einen Temperaturfühler 39 unmittelbar vor der Pumpe 34 gesteuert werden kann. Das Wasser mit der konstanten Temperatur von 15 °C tritt aus der Pumpe 34 in Richtung des Pfeiles 40 aus und strömt durch den Kreislauf 33 durch die Leitung 41 zu dem Ventil 31, von wo aus ein Teil der Flüssigkeit durch den Einlaß 22 und durch den Gehäuseschuß 11a hindurchtritt und wieder in den Wärmetauscher 35 gelangt. Ein Teil des durch die Leitung 41 in das Ventil 31 eintretenden Wassers kann über den Auslaß 32 aus dem Ventil 31 an dem Gehäuseschuß 11a vorbeigeleitet werden und an der Eingangsseite oder vorzugsweise an der Ausgangsseite des Wärmetauschers 35 mit dem Kreislauf 33 wieder vereinigt werden.

Der Fluidikkreislauf 33 für Wasser enthält eine Abzweigung 42, so daß das Wasser des Fluidikkreislaufes 33 über das Ventil 36 auch zur Kühlung des Fluidikkreislaufes 29 mit Hilfe des Wärmetauschers 43 verwendet werden kann. Der nicht durch das Ventil 36 in den Wärmetauscher 43 tretende Teil des Wassers des Kreislaufes 33 wird in die Leitung 44 zur Eingangsseite des Wärmetauschers 35 oder vorzugsweise zu dessen Ausgangsseite zurückgeführt. Das Ventil 36 wird von einem Temperaturfühler 45 beeinflußt, der die Temperatur des Wärmeträgerfluids in dem Fluidkreislauf 29 abfühlt.

Der Fluidikkreislauf 29 für das Wärmeträgerfluid, beispielsweise Öl, mit der niedrigeren Temperatur, beispielsweise 50 °C, enthält neben dem bereits erwähnten Wärmetauscher 43 eine Pumpe 46 und ggf. einen Behälter 47 mit einer elektrischen Beheizung 48, eine aus dem Behälter 47 führende Leitung 49, die mit den Einlässen 26 aller Dreiwegeventile 24 verbunden ist, sowie eine mit den Auslässen 23 aus den Gehäuseschüssen 11 verbundene Rückleitung 50. Darüber hinaus ist ein Nebenschluß 51 mit einem Filter 52 vorgesehen. Mit Hilfe eines Temperaturfühlers 53 wird über eine Steuereinheit 54 die Temperatur in dem Behälter 47 so gesteuert, daß sie exakt auf 50 °C liegt. Falls die in der Rückleitung 50 ankommende Flüssigkeit wärmer ist als 50 °C wird sie in dem Wärmetauscher 43 auf 50 °C abgekühlt, was mit Hilfe des Wassers des Kreislaufes 33 geschieht. In Extremfällen kann im Behälter 47 eine Aufheizung auf die Solltemperatur erfolgen.

Der Fluidikkreislauf 28 für das Wärmeträgerfluid mit der höheren Temperatur ist im Prinzip genauso aufgebaut wie der Kreislauf 29, jedoch ohne einen Wärmetauscher. Er enthält also einen Behälter 55 mit einer Beheizung 56, die von einer Steuereinheit 57 gesteuert wird, die mit einem Temperaturfühler 58 verbunden ist. Eine Pumpe 59 fördert das Fluid in Richtung des Pfeiles 60 in eine Leitung 61, die mit den Einlässen 25 aller Dreiwegeventile 24 verbunden ist. Damit liegen alle Einlässe 25 für das Fluid höherer Temperatur parallel zueinander, während alle Einlässe 26 für das Fluid mit niedrigerer Temperatur ebenfalls parallel zueinander liegen.

Auch der Fluidikkreislauf 28 enthält einen Nebenschluß 62 mit einem Filter 63.

Die Auslässe 23 aus den Gehäuseschüssen sind in einer gemeinsamen Rückleitung 64 zusammengefaßt, die mit Hilfe mehrerer Ventile 65 in Abschnitte unterschiedlich bevorzugter Temperatur aufteilbar sind. Es ist beispielsweise denkbar, daß rechts von dem mittleren Ventil 25 Fluid mit höherer Temperatur zurückgelangt, während links von dem Ventil 65 Fluid mit niedrigerer Temperatur zurückgelangt. In diesem Falle könnte man das mittlere Ventil 65 schließen, so daß dann beide Kreisläufe voneinander getrennt werden. Um dann unterschiedliche Mengen an benötigtem Wärmemittel höherer oder niederer Temperatur auszugleichen, ist auch an der Ausgangsseite eine Verbindung zwischen den Kreisläufen 28 und 29 geschaffen. Hierzu ist ein Bypass vorgesehen, der beispielsweise aus zwei parallel geschalteten Rückschlagventilen 66 bestehen kann. Natürlich ist es auch möglich, beispielsweise das mittlere Ventil 65 nicht ganz zu schließen. Selbstverständlich darf von den Ventilen 65 nur eines geschlossen werden. Es ist auch denkbar, daß die zurückgeführte Temperatur unterschiedlich aufgeteilt ist, daß beispielsweise die äußeren Gehäuseschüsse niedrige Temperatur und die mittleren Gehäuseschüsse hohe Temperatur aufweisen. Auch in diesem Fall wäre es möglich, die Leitungen so zu schalten, daß eine unnötige Vermischung von Fluid unterschiedlicher Temperatur vermieden wird.

Im vorliegenden Fall ist die Rückleitung 50 mit der linken Hälfte der Rückleitung 64 und die Rückleitung 67 des Fluidkreislaufes 28 mit der rechten Hälfte der Rückleitung 64 verbunden.

Das Ventil 31 für den Gehäuseschuß 11a sowie die Ventile 24 für die übrigen Gehäuseschüsse 11 sind mit je einem Servoantrieb 68 versehen, der die Ventilstellung einstellt. Die Ansteuerung der Servoantriebe 68 erfolgt über gestrichelt dargestellte Steuerleitungen 69.

Es ist aus Fig. 1 deutlich zu sehen, daß jeder Gehäuseschuß 11 unabhängig von dem anderen durch Mischung von Fluid aus zwei Fluidkreisläufen unterschiedlicher Temperatur temperierbar, d.h. kühlbar, heizbar bzw. auf einer bestimmten Temperatur stabilisierbar ist.

Bei den nachfolgenden Temperierungseinrichtungen haben die einzelnen Gehäuseschüsse eigene Kreisläufe, wobei diesen jeweils nur soviel höher oder tiefer temperiertes Thermoöl bzw. Fluid zudosiert wird, wie zur Erzielung der gewünschten Temperatur im Gehäuseschuß erforderlich ist, wodurch erhebliche Energieeinsparungen erzielbar sind. Wird das Eigenvolumen eines solchen Kreislaufs gering gehalten, dann arbeitet das System ebenfalls flink.

Fig. 2 zeigt eine andere Möglichkeit der Temperierung mit Hilfe anders aufgebauter Ventile. Es ist nur ein Gehäuseschuß 11 dargestellt und die Kreisläufe 28 bzw. 29 sind nur vereinfacht dargestellt. Die Leitung 61 des Fluidkreislaufes 28 in Fig. 1 führt in einen Einlaß 70 eines Servoventiles 71, das ebenfalls von einem Servoantrieb 68 betätigbar ist, der über eine Steuerleitung 69 angesteuert wird. Aus dem Ventil 71 kann das Fluid des Kreislaufes 28 entweder nach links mit dem Einlaß 22 des Gehäuseschusses oder nach rechts mit der Rückleitung 67 verbunden werden. An dem zweiten Einlaß 73 des Ventiles 71 liegt eine Leitung 74 an, die von einem zweiten Servoventil 72 kommt, das genauso aufgebaut ist wie das Servoventil 71 im Kreislauf 28. Mit Hilfe des Servoventils 72 läßt sich dem Kreislauf für den Gehäuseschuß 11, der zusätzlich zu der Ausbildung nach Fig. 1 eine eigene Pumpe 75 aufweist, kühleres Fluid zumischen, während sich mit dem Ventil 71 dem Kreislauf für den Gehäuseschuß 11 wärmeres Fluid zumischen läßt. Natürlich ist immer nur eines von beiden erforderlich. Daher könnten die Servorventile 71, 72 der Ausführungsform nach Fig. 2 von einem gemeinsamen Servoantrieb antreibbar sein. Die weiteren Gehäuseschüsse haben entsprechende eigene Kreisläufe, die über Servoventile mit den Kreisläufen 28 und 29 der extrem temperierten Wärmemittel verbunden sind.

Bei der Einrichtung nach Fig. 3 liegen die Leitungen 61 bzw. 49 der Kreisläufe 28 bzw. 29 jeweils an einem einfachen Ventil 76 an, die beide von einem gemeinsamen Servoantrieb 68 betätigbar sind. Bei der Einrichtung nach Fig. 3 braucht nämlich nur eines der beiden Ventile 76 gleichzeitig geöffnet zu sein. Der Auslaß 23 weist eine Abzweigung 77 auf, in der eine Pumpe 78 angeordnet ist. Hinter der Pumpe 78 kann ein weiteres einfaches Ventil 79 angeordnet sein, das ebenfalls von einem Servoantrieb 68 steuerbar ist. Mit Hilfe der Abzweigung 77 läßt sich ein Teil des den Gehäuseschuß 11 verlassenden Fluids zurückführen, wobei im Regelfall die Temperatur dieses Fluids zwischen den Temperaturen der beiden Kreisläufe 28, 29 liegt. Es erfolgt also in diesem Fall normalerweise eine Mischung zwischen der zurückgeführten Temperatur und der niedrigeren oder der höheren Temperatur. Dies kann zu einer sehr beachtlichen Energieeinsparung führen, da weniger Öl geheizt bzw. gekühlt zu werden braucht.

Darüber hinaus hat die Ausbildung nach Fig. 3 den Vorteil, daß keine komplizierten Dreiwegeventile oder gar Vierwegeventile mit komplizierten Ventilkegelformen verwendet werden müssen.

Bei der Einrichtung nach Fig. 4 wird ebenfalls ein Teil des den Auslaß verlassenden Fluides über eine Abzweigung 77 und eine Pumpe 78 zurückgeführt, wobei der zurückgeführte Teil an den beiden Einlässen zweier Dreiwegeventile 80 anliegt. Mit dem linken Dreiwegeventil 80 kann eine Mischung mit dem Fluid aus dem Kreislauf 29 erfolgen, während mit dem rechten Dreiwegeventil 80 eine Mischung mit dem Fluid aus dem Kreislauf 28 erfolgen kann. Bei der Einrichtung nach Fig. 4 können beide Dreiwegeventile von einem gemeinsamen Servoantrieb 68 angetrieben sein, da immer nur eines der beiden Dreiwegeventile 80 geöffnet zu sein braucht. Darüber hinaus müssen die Servoventile 80 nach Fig. 4 anders ausgebildet sein als die nach Fig. 1. Bei der Ausführungsform nach Fig. 4 müssen beide Ventile 80 in der Lage sein, einen Durchfluß vollständig abzuschließen.

Fig. 5 zeigt eine der Fig. 4 ähnliche Temperierung, bei der anstelle der beiden Dreiwegeventile 80 nach Fig. 4 ein einziges Vierwegeventil 81 mit einem Servoantrieb 68 verwendet wird. Das Vierwegeventil 81 besitzt drei Einlässe und einen Auslaß. Bei den Ausführungsformen nach Fig. 3 bis 5 kann eine Möglichkeit gegeben sein, die Pumpe 78 abzustellen, falls eine Mischung mit der zurückgeführten Temperatur nicht erfolgen soll.

Denkbar ist es beispielsweise bei der Einrichtung nach Fig. 3, daß anstelle des Ventiles 79 eine Pumpe verwendet wird, deren Durchfluß steuerbar ist. In diesem Fall würde die unterschiedliche Mischung mit Hilfe der im Durchfluß steuerbaren Pumpe erfolgen.

Die Einrichtungen nach den Figuren 2 bis 5 stellen jeweils nur einen einzelnen Gehäuseschuß 11 dar, wobei bei einem Extruder 12 wie in Fig. 1 eine entsprechende Parallelschaltung der Hydraulikkreise erfolgt. Dabei können die Umwälzpumpen 78 der Schußkreisläufe einen gemeinsamen Antrieb besitzen.

Fig. 6 zeigt einen Querschnitt durch einen Gehäuseschuß 11, aus dem sich die Anordnung der beiden Schnecken 14, 15 in der Gehäusebohrung 13 ergibt. Ebenfalls zu sehen ist, daß in Längsrichtung der Gehäuseschüsse Wärmemittelkanäle angeordnet sind, die die Form von Bohrungen aufweisen, und an der einen Seite des Gehäuseschusses mit dem Einlaß 22 und an der anderen Seite mit dem Auslaß 23 verbunden sind. Der Einlaß 22 und der Auslaß 23 sind wiederum nur schematisch dargestellt. Dargestellt ist ebenfalls schematisch das Dreiwegeventil 24 nach Fig. 1. Zu sehen sind ebenfalls die Anordnungen der Temperaturfühler. Ein erster Temperaturfühler 83 mißt die Temperatur des Fluids im Einlaß 22 des Gehäuseschusses 11, während ein zweiter Temperaturfühler 84 die Temperatur am Auslaß 23 abfühlt. Ein dritter Temperaturfühler 85 ist in dem Metall des Gehäuseschusses 11 angeordnet, wobei er zwischen zwei Wärmemittelkanälen 82 bis dicht an die Gehäuseöffnung 13 herangeführt ist.

Ein vierter Temperaturfühler 86 ist im Zwickel der Gehäusebohrung 13 angeordnet, aus dem er etwas herausragt. Er ist so angeordnet, daß er von den Gewindegängen 87 der beiden Schnecken 14, 15 nicht berührt werden kann. Es ist jedoch zu sehen, daß er von dem Kunststoffmaterial berührt wird, so daß er dessen Temperatur messen kann.

Alle Temperaturfühler sind über Steuerleitungen 88 mit Meßwandlern 89 verbunden, die die von den Temperaturfühlern 83 bis 86 gelieferten Signale in weiterverarbeitbare Signale umwandeln. Die Meßwandler 89 sind über weitere Steuerleitungen 90 mit dem eigentlichen Steuergerät 91 verbunden. Dieses Steuergerät 91 erzeugt die Signale, die zur Steuerung des Servoantriebs 68 des Ventiles 24 erforderlich sind. Bei der Einrichtung nach Fig. 6 sind vier Temperaturfühler vorhanden, so daß das Steuergerät 91 insgesamt vier Meßwerte verarbeitenkann. Es ist jedoch auch möglich, daß nur einer der Temperaturfühler vorhanden ist oder daß das Steuergerät 91 eine Auswahl aus den gelieferten Meßwerten treffen kann.

Aus den Meßwerten und den Durchflußmengen der einzelnen Schüsse lassen sich auch die Energiebilanzen von chemischen Reaktionen, die im Extruder durchgeführt werden, errechnen und dadurch Rückschlüsse auf den Reaktionsablauf ziehen. Es können auch Kunststoffe, ausgehend von gasförmigen Monomeren, hergestellt werden, indem die Einfülltrichter durch Gaseinleitungsstutzen ersetzt werden und die Antriebsenden 16, 17 der Schnecken 14, 15 gasdicht aus dem Extruder geführt sind. Weiterhin kann der Extruder, der vorzugsweise druckdicht ausgebildet ist, auch noch Druckmeßstellen und Entnahmestellen für Substanzproben aufweisen.

Beispiel 1

In einem auf 20 °C gekühlten doppelwandigen Rührbehälter wurden 400 Mol (40 kg) Äthylacrylat, 100 Mol (8,6 kg) Methacrylsäure, 730 g (1,5 %) Dilauroylperoxid und 120 g (0,25 %) Tetradecylmercaptan gelöst und in einen Zwischenbehälter überführt. Die homogene Lösung wurde aus dem Zwischenbehälter mit einer Rate von 16 kg pro Stunde in die Einfüllzone eines gleichsinnig drehenden, dichtkämmenden Zweischneckenextruders von 60 mm Durchmesser und 2580 mm Länge eingepumpt. Der Extruder hatte 10 Zonen, die erfindungsgemäß heiß- bzw. kühlbar waren. Die Einfüllzone war auf 20 °C gekühlt, die Zonen 2 bis 8 hatten eine Temperatur von 105 °C, die Zonen 9 und 10 waren auf 145 °C temperiert. Der Kopf des Reaktionsextruders war über eine temperierbare Schmelzenleitung unmittelbar mit einem zweiten Extruder verbunden (Kaskadenschaltung).

Die erste Zone des zweiten Extruders besaß einen Aufsatz zur Abdestillation von nicht polymerisierten Monomeren. Sie hatte eine Temperatur von 160 °C. Bei einer Schneckendrehzahl von 50 pro Minute und einer Stromaufnahme von 40 A im ersten Extruder (Reaktionsextruder) wurden aus dem Destillationsaufsatz des zweiten Extruders (Entgasungs- und Compoundierextruders) 0,15 kg Flüssigkeit pro Stunde abdestilliert (ca. 99 % Rohumsatz). In den Zonen 2 bis 4 des Compoundierextruders wurde die Polymerschmelze bei 160 °C im Vakuum von 1 torr entgast. In den Zonen 5 bis 7 wurden bei 145 °C 5 % Stearinsäure eingemischt, danach wurde die stearinsäurehaltige Polymerschmelze aus Zone 8 bei 145 °C aus einer Breitschlitzdüse auf einen 100 µm dicken Film aus Hydroxypropylcellulose (Klucel H von Hercules), welche 20 % Soda enthielt, aus einer vorgeschalteten Abwickelstation aufgebracht, die Dicke der Beschichtung war 30 µm.

Die Gesamtfolie ist bei Kontakt mit Wasser von der Beschichtungsseite her wasserbeständig, bei Kontakt mit Wasser von der Hydroxypropylcellulose-Seite her löst sich die Gesamtfolie völlig auf.

Beispiel 2

In einem auf 20 °C gekühlten doppelwandigen Rührbehälter wurden 100 Mol (8,6 kg) Vinylpropyläther, 300 Mol (47,2 kg) Dimethylaminoäthylmethacrylat, 280 g (0,5 %) Azoisobuttersäurenitril und 112 g (0,2 %) β-Nitrostyrol gelöst und in einen Zwischenbehälter überführt. Die homogene Lösung wurde aus dem Zwischenbehälter mit einer Rate von 32 kg pro Stunde in die Einfüllzone eines gleichsinnig drehenden, dichtkämmenden Zweischneckenextruders von 60 mm Durchmesser und 2580 mm Länge eingepumpt. Der Extruder hatte 10 Zonen, die erfindungsgemäß heiz- und kühlbar waren. Die Einfüllzone war auf 20 °C gekühlt, die Zonen 2 bis 8 hatten eine Temperatur von 120 °C, die Zonen 9 und 10 waren auf 145 °C temperiert. Der Kopf des Reaktionsextruders war über eine temperierbare Schmelzenleitung unmittelbar mit einem zweiten Extruder verbunden (Kaskadenschaltung).

Die erste Zone des zweiten Extruders besaß einen Aufsatz zum Abdestillieren von nicht polymerisierten Monomeren, sie hatte eine Temperatur von 170 °C. Bei einer Schneckendrehzahl von 75 pro Minute und einer Stromaufnahme von 30 A im ersten Extruder (Reaktionsextruder) wurden aus dem Destillationsaufsatz des zweiten Extruders (Entgasungs- und Compoundierextruders) im Durchschnitt 2,5 g Flüssigkeit pro Stunde abgezogen (Rohumsatz ca. 92 %). In den Zonen 2 bis 4 des Compoundierextruders wurde die Polymerschmelze bei 170 °C im Vakuum von 1 torr entgast. In den Zonen 5 bis 7 wurden bei 145 °C 20 % 2-Amino-2-methyl-1,3-propandiol (Ammediol, AMPD) eincompoundiert. Danach wurde die AMPD-haltige Polymerschmelze aus Zone 8 bei 145 °C in den ersten Kanal einer Zweikanal-Breitschlitzdüse geführt. In den zweiten Kanal dieser Breitschlitzdüse wurde die im Beispiel 1 beschriebene, aus Zone 8 austretende stearinsäurehaltige Polymerschmelze eingeführt und durch Coextrusion eine Verbundfolie hergestellt.

Der Verbundfilm war insgesamt ca. 150 µm dick. Die stearinsäurehaltige Seite des Filmes (Äthylacrylat-methacrylsäurecopolymerisat) war ca. 50 µm dick, sie war wasserbeständig. Die AMPD-haltige Seite des Verbundfilmes (Dimethylaminoäthyl-methacrylat-vinylpropyläther-copolymerisat) war ca. 100 µm dick, bei Kontakt mit Wasser von dieser Seite her löste sich der Gesamtfilm völlig auf.

Die Herstellung der thermoplastischen Kunststoffe und ggf. auch deren Verarbeitung kann mit Hilfe der Extruder kontinuierlich erfolgen, indem die Ausgangsprodukte bzw. deren Mischung dem Extruder kontinuierlich zudosiert werden. Nach Arbeitsunterbrechungen reicht ein gesteuertes Aufheizen aus, um die im Extruder verfestigten Produkte zu schmelzen, so daß die Produktion fortgesetzt werden kann.

**Ansprüche**

1. Verfahren zur Herstellung von thermoplastischen Kunststoffen durch Polymerisation von Monomeren mit Hilfe von Extrudern, bei dem die Transportstrecke der Extruder in verschiedene, vorzugsweise mindestens fünf, Temperaturzonen unterteilt wird, und die Temperaturen in diesen Zonen individuell und unabhängig voneinander eingestellt werden, wobei nach im wesentlichen beendeter Reaktion an mindestens einer Stelle entlang der Reaktionsstrecke flüchtige Bestandteile, insbesondere nicht umgesetzte Monomere, aus der Reaktionsmischung abgezogen werden, dadurch gekennzeichnet, daß der Transportstrecke im Extruder ein vorbestimmtes Temperaturprofil aufgezwungen wird, die beim Durchlaufen der Transportstrecke stattfindende Polymerisation in bestimmteZonen lokalisiert wird, zwei hintereinander geschaltete Extruder vorgesehen sind, die Polymerisation im ersten, dem Reaktionsextruder, durchgeführt wird, die Polymerschmelze über eine stauende Fördereinrichtung in den zweiten Extruder gefördert wird, eine Destillation zum Abzug flüchtiger Bestandteile am Anfang des zweiten Extruders durchgeführt wird und das erhaltene Polymerisat ohne Unterbrechung des Arbeitsprozesses am Ende des zweiten Extruders extrudiert wird.

2. Verfahren nach Anspruch 1, dadurch gekennzeichnet, daß die Temperierung ausschließlich mit Hilfe von Fluiden, insbesondere Flüssigkeiten, vorgenommen wird, die die Temperaturzonen durchströmen, und zur Temperierung der Temperaturzonen die Temperatur und/oder die Menge des die jeweilige Zone durchströmenden Fluids verändert wird.

3. Verfahren nach Anspruch 2, dadurch gekennzeichnet, daß die Strömungsgeschwindigkeit des Fluids und/oder die Förderungsgeschwindigkeit des Extruders in den einzelnen Temperaturzonen so eingestellt wird, daß die Temperaturdifferenz des Fluids zwischen Zoneneingang und Zonenausgang maximal 3 °C vorzugsweise unter 1 °C beträgt.

4. Verfahren nach einem der vorhergehenden Ansprüche, dadurch gekennzeichnet, daß der Zugabebeginn, die Menge und das Mischungsverhältnis der Reaktionspartner, die Art und Breite des Temperaturprofils der Transportstrecke, der Druck und/oder die Schneckendrehzahl in Abhängigkeit von der gewünschten Reaktion programmgesteuert vorgegeben werden.

5. Verfahren nach einem der vorhergehenden Ansprüche, dadurch gekennzeichnet, daß im wesentlichen durch jede Temperaturzone ein individueller Fluidkreislauf umgewälzt wird und die Solltemperatur eingestellt wird, indem diesem Kreislauf bei Bedarf Fluid mit höherer oder niederer Temperatur zugeführt und eine entsprechende Fluidmenge aus dem Rücklauf abgeführt wird.

6. Verfahren nach einem der vorhergehenden Ansprüche, dadurch gekennzeichnet, daß Fluidrückströme aus den einzelnen Temperaturzonen bzw. Zonenkreisläufen in Abhängigkeit von ihrer Temperatur und/oder Menge in mindestens zwei getrennte Hauptrückströme gesammelt werden, von denen jeweils mindestens einer gekühlt und einer aufgeheizt wird.

7. Verfahren nach einem der vorhergehenden Ansprüche, dadurch gekennzeichnet, daß ein Fluid mit mindestens zwei verschiedenen Temperaturstufen verwendet wird, wobei eine Temperaturstufe unterhalb und eine Temperaturstufe oberhalb der Solltemperaturen der mit diesem Fluid temperierten Zonen liegt und die Fluide vor, vorzugsweise unmittelbar vor dem Eintritt in die jeweilige Extruderzone im gewünschten Mengenverhältnis miteinander vermischt werden, insbesondere daß ein Fluid eingesetzt wird, bei dem die Temperatur einer Temperaturstufe weniger als 5 °C, vorzugsweise weniger als 3 °C, von der Solltemperatur verschieden ist und die Temperatur der anderen Temperaturstufe vorzugsweise mindestens 30 °C, insbesondere mindestens 50 °C von der Solltemperatur verschieden ist.

8. Verfahren nach einem der vorhergehenden Ansprüche, dadurch gekennzeichnet, daß die Verweildauer von Reaktionspartnern in den einzelnen Temperaturzonen verschiedengehalten wird, wobei sie in Zonen mit hohem, erforderlichem Wärmeaustausch vorzugsweise geringer ist.

9. Anlage zur Durchführung des Verfahrens nach einem der vorhergehenden Ansprüche, mit mindestens einem Mehrschneckenextruder (12) mit einem aus mehreren Schüssen (11) bestehenden Gehäuse und einem Antrieb für die Schnecken (14, 15), wobei wenigstens einige Schüsse (11 ) mit einem Einlaß (22) und einem Auslaß (23) versehene Fluidkanäle (82) aufweisen und mit voneinander unabhängigen Temperiereinrichtungen ausgerüstet sind und an mindestens einer Stelle eine Abzugseinrichtung für flüchtige Bestandteile vorgesehen ist, dadurch gekennzeichnet, daß sie zwei kaskadenförmig hintereinander geschaltete Extruder aufweist, von denen der erste als Reaktionsextruder zur Durchführung der Polymerisation und der zweite als Entgasungs- und Compoundierungsextruder eingerichtet ist, die beiden Extruder über eine mit einer stauenden Fördereinrichtung versehene Leitung verbunden sind, und am Anfang des Compoundierungsextruders eine Destillationseinrichtung vorgesehen ist.

10. Anlage nach Anspruch 9, dadurch gekennzeichnet, daß die Extruderschnecken (14, 15) eine sich über ihre Länge ändernde Steigung aufweisen, die sich vorzugsweise diskontinuierlich ändert, insbesondere Misch- und/oder Staukörper besitzen.

11. Anlage nach Anspruch 9 oder 10, dadurch gekennzeichnet, daß mindestens ein, vorzugsweise jeder Gehäuseschuß (11) mindestens eine zusätzliche Öffnung aufweist, die zur Zuführung bzw. Entnahme von Stoffen und/oder zur Druckmessung vorgesehen ist.

12. Anlage nach einem der Ansprüche 9 bis 11, dadurch gekennzeichnet, daß zur Temperierung der einzelnen Schüsse (11) jeweils mindestens eine Mischeinrichtung (24, 71, 72; 76, 79; 80; 81 ) für verschieden temperierte Fluide vorgesehen ist, die vorzugsweise unmittelbar vor dem Eintritt des Fluids in den Gehäuseschuß (11) angeordnet ist, und die Mischeinrichtung für jeden Gehäuseschuß (11), insbesondere mindestens ein Servoventil (24; 71, 72; 76, 79; 80; 81) mit einem vorzugsweise kontinuierlich veränderbaren Mischungsverhältnis aufweist.

13. Anlage nach einem der Ansprüche 9 bis 12, dadurch gekennzeichnet, daß die Temperiereinrichtung (24; 71, 72; 76, 79; 80; 81) einer jeden Zone von mindestens einem Temperaturfühler (83 bis 86) über eine elektronische Steuerung (91) zur Regelung der Temperatur in dem jeweiligen Gehäuseschuß beeinflußbar sind und hierzu ein Temperaturfühler (85) zur Messung der Temperatur des Gehäuseschusses (11) im Gehäuseschuß, vorzugsweise in geringem Abstand von der Innenbohrung (13), ein Temperaturfühler (83) zur Messung der Fluidtemperatur am Einlaß (22) in den Gehäuseschuß (11), ein Temperaturfühler (84) zur Messung der Fluidtemperatur am Auslaß (23) aus dem Gehäuseschuß (11) und/oder ein Temperaturfühler (86) zur Messung der Temperatur des Kunststoffes innerhalb der Extruderbohrung (13) angeordnet ist.

14. Anlage nach einem der Ansprüche 9 bis 13, dadurch gekennzeichnet, daß zur Temperierung der Gehäuseschüsse mit dem Fluid mindestens ein Hauptkreislauf (28, 29) mit einer Pumpe (59, 34) und vorzugsweise je mindestens einem Nebenschluß (62, 51) vorgesehen sind.

15. Anlage nach einem der Ansprüche 9 bis 14, dadurch gekennzeichnet, daß im wesentlichen jeder Gehäuseschuß einen eigenen, vorzugsweise mit einer Pumpe (78) versehenen Nebenkreislauf (77) besitzt, der mit mindestens einem Hauptkreislauf (28, 29) über die Mischeinrichtung (71, 72; 76, 79; 80; 81) kommuniziert.

16. Anlage nach Anspruch 15, dadurch gekennzeichnet, daß die Pumpen (78) der Nebenkreisläufe (77) mit einem gemeinsamen Antrieb versehen sind.

17. Anlage nach einem der Ansprüche 14 bis 16, dadurch gekennzeichnet, daß mindestens der Kreislauf (28) für die höhere Temperatur eine vom Extruder örtlich getrennte, vorzugsweise elektrische Beheizung (56) mit einer Temperaturregelung aufweist und die Kühlung des Fluids über mindestens einen Wärmeaustauscher (43) erfolgt, der in einem Hauptkühlkreislauf (29) und/oder in je einem regelbaren Parallelabschnitt der Leitung der Nebenkreisläufe (77) angeordnet ist.

18. Anlage nach einem der Ansprüche 9 bis 17, dadurch gekennzeichnet, daß die Fluidauslässe (23) mehrerer, vorzugsweise aller Gehäuseschüsse (11) bzw. die Auslässe der Nebenkreisläufe (77) in eine gemeinsame Rückleitung (64) münden.

19. Anlage nach einem der Ansprüche 9 bis 18, dadurch gekennzeichnet, daß dem Extruder mindestens eine Dosiereinrichtung mit veränderbarer Dosiermenge zugeordnet ist, vorzugsweise mindestens zwei Dosierpumpen mit einstellbarem Hub vorgesehen sind, die einen gemeinsamen regelbaren Antrieb aufweisen.

**Claims**

1. Process for the production of thermoplastics by polymerizing monomers with the aid of extruders, in which the conveying path of the extruder is subdivided into various and preferably at least five temperature zones and the temperatures in said zones are individually adjusted independently of one another and when the reaction is substantially completed at at least one point along the reaction path volatile constituents, particularly unreacted monomers are drawn off from the reaction mixture, which is characterized in that a predetermined temperature profile is imposed on the conveying path in the extruder, the polymerization taking place on passing through the conveyor path is localized in specific zones, two successively connected extruders are provided, the polymerization is performed in the first or reaction extruder and the polymer melt is conveyed via a damming back conveying means into the second extruder, a distillation is performed at the start of the second extruder for drawing off volatile constituents and the polymer obtained is extruded at the end of the second extruder without interrupting the working process.

2. Process according to claim 1, characterized in that temperature control or tempering is exclusively carried out with the aid of fluids, particularly liquids, which flow through the temperature zones and for tempering the temperature zones the temperature and/or the quantity of the fluid flowing through said zone is modified.

3. Process according to claim 2, characterized in that the flow rate of the fluid and/or the conveying speed of the extruder in the individual temperature zones is adjusted in such a way that the temperature difference of the fluid between the zone inlet and the zone outlet is max 3°C and preferably below 1°C.

4. Process according to one of the preceding claims, characterized in that the start of addition, the quantity and mixing ratio of the reactants, the nature and the width of the temperature profile of the conveying path, the pressure and/or the number of screws are predetermined in program-controlled manner as a function of the desired reaction.

5. Process according to one of the preceding claims, characterized in that substantially in each temperature zone there is a circulation of an individual fluid circuit and the desired temperature is set in that, as required, fluid at a higher or lower temperature is supplied to the said circuit and a corresponding fluid quantity is removed from the circuit.

6. Process according to one of the preceding claims, characterized in that fluid return flows from the individual temperature zones or zone circuits are collected as a function of their temperature and/or quantity in at least two separate main return flows, whereof at least one is cooled and one is heated.

7. Process according to one of the preceding claims, characterized in that use is made of a fluid with at least two different temperature stages, one temperature stage being below and one above the desired temperatures of the zones temperature controlled with the said fluid and before and preferably immediately before the entry into the particular extruder zone the fluids are mixed with one another in the desired quantity ratio, particularly in that a fluid is used in which the temperature of one temperature stage differs by less than 5°C and preferably less then 3°C from the desired temperature and the temperature of the other temperature stage preferably differs by at least 30° and in particular at least 50°C from the desired temperature.

8. Process according to one of the preceding claims, characterized in that the residence time of the reactants in the individual temperature zones is kept different and is preferably lower in zones with a high, necessary heat exchange.

9. Apparatus for performing the process according to one of the preceding claims, with at least one multiple screw extruder (12) with a casing comprising several compartments (11) and a drive for the screws (14, 15), in which at least certain compartments (11) have fluid channels provided (82) with an inlet (22) and an outlet (23) and are equipped with independent temperature control devices and at at least one point a drawing off device for the volatile constituents is provided, characterized in that it has two cascade-like, successively connected extruders, whereof the first is in the form of a reaction extruder for performing the polymerization and the second is in the form of a degassing and compounding extruder, the two extruders are connected by means of a line having a damming back conveying device and at the start of the compounding extruder a distillation device is provided.

10. Apparatus according to claim 9, characterized in that the extruder screws (14, 15) have a pitch varying over the length thereof and which preferably changes in a discontinuous manner and in particular have mixing and/or damming back bodies.

11. Apparatus according to claims 9 or 10, characterized in that at least one and preferably each casing compartment (11) has at least one additional opening, which is provided for the supply or removal of substances and/or for pressure measuring purposes.

12. Apparatus according to one of the claims 9 to 11, characterized in that for the tempering of the individual compartments (11) there is in each case at least one mixing device (24, 71, 72; 76, 79; 80; 81) for differently tempered fluids, which is preferably located immediately upstream of the entrance of the fluid into the casing compartment (11) and that the mixing device for each casing compartment (11) has in particular at least one servovalve (24; 71, 72; 76, 79; 80; 81) with a preferably continously variable mixing ratio.

13. Apparatus according to one of the claims 9 to 12, characterized in that the tempering device (24; 71, 72; 76, 79; 80; 81) of each zone can be influenced by at least one temperature sensor (83 to 86) via an electronic control (91) for regulating the temperature in the particular casing compartment and for this purpose there is a temperature sensor (85) for measuring the temperature of the casing compartment (11) located in the latter preferably at a limited distance from the inner bore (13), a temperature sensor (83) for measuring the fluid temperature at the inlet (22) in the casing compartment (11), a temperature sensor (84) for measuringthe fluid temperature at the outlet (23) from the casing compartment (11) and/or a temperature sensor (86) for measuring the temperature of the plastics material within the extruder bore (13).

14. Apparatus according to one of the claims 9 to 13, characterized in that for tempering the casing compartments with the fluid there is at least one mains circuit (28, 29) with a pump (59, 34) and preferably in each case one bypass (62, 51).

15. Apparatus according to one of the claims 9 to 14, characterized in that substantially each casing compartment has its own secondary circuit (77) preferably provided with a pump (78) and which communicates with at least one mains circuit (28, 29) via the mixing device (71, 72; 76, 79; 80; 81).

16. Apparatus according to claim 15, characterized in that the pumps (78) of the secondary circuits (77) are provided with a common drive.

17. Apparatus according to one of the claims 14 to 16, characterized in that at least the circuit (28) for the higher temperature has preferably an electrical heating means (56) with a temperature control and which is separated from the extruder and the fluid cooling takes place by means of at least one heat exchanger (43) , which is located in a main cooling circuit (29) and/or in in each case a regulatable parallel portion of the line of the secondary circuits (77).

18. Apparatus according to one of the claims 9 to 17, characterized in that the fluid outlets (23) of several and preferably all the casing compartments (11) or the outlets of the secondary circuits (77) issue into a common return line (64).

19. Apparatus according to one of the claims 9 to 18, characterized in that with the extruder is associated at least one metering device with a variable metering quantity and preferably there are at least two metering pumps with an adjustable lift and which have a common regulatable drive.

## Revendications

1. Procédé pour fabriquer des matières synthétiques thermoplastiques par polymérisation de monomères à l'aide d'extrudeuses, dans lequel la zone de transport de l'extrudeuse est divisée en plusieurs, de préférence cinq zones de température, dont les températures peuvent être réglées individuellement et indépendamment l'une de l'autre, les composants volatils, en particulier les monomères n'ayant pas réagi, étant éliminés du mélange réactionnel par extraction en au moins un endroit le long de la zone de réaction après que la réaction soit substantiellement terminée, procédé caractérisé en ce qu'un profil de température prédéterminé est imposé à la zone de transport de l'extrudeuse, que la polymérisation qui a lieu lors du parcours de la zone de transport est localisée dans certaines zones, que deux extrudeuses raccordées en série l'une derrière l'autre sont prévues, que la polymérisation est effectuée dans la première extrudeuse qui est l'extrudeuse de réaction, que la masse fondue polymère est refoulée dans la seconde extrudeuse par un dispositif transporteur à accumulation, qu'une distillation est effectuée au début de la seconde extrudeuse pour extraire les composants volatils et que le polymère obtenu est extrudé sans interruption du processus de travail à la fin de la seconde extrudeuse.

2. Procédé selon la revendication 1, caractérisé en ce que les zones de température sont exclusivement tempérées à l'aide de fluides, en particulier des liquides qui parcourent les zones de température, et que pour équilibrer leur température on fait varier le température et/ou la quantité de fluide parcourant la zone considérée.

3.  Procédé selon la revendication 2, caractérisé en ce que la vitesse d'écoulement du fluide et/ou la vitesse d'avance de l'extrudeuse est réglée dans les zones de température individuelles de telle manière que la différence de température du fluide entre l'entrée de la zone et la sortie de la zone a une valeur maximale de 3°C, de préférence inférieure à 1°C.

4.  Procédé selon l'une des revendications précédentes, caractérisé en ce que le début de l'introduction, la quantité et le rapport de mélange des partenaires réactionnels, le genre et la largeur du profil de température de la zone de transport, la pression et/ou le nombre de tours de la vis sont prédéterminés par commande programmée en fonction de la réaction désirée.

5.  Procédé selon l'une des revendications précédentes, caractérisé en ce que, substantiellement, chaque zone met en circulation un circuit individuel de fluide et règle la température de consigne, cela en ce que du fluide à température plus élevée ou plus basse est au besoin amené à ce circuit, une quantité correspondante de fluide étant évacuée par le circuit de retour.

6.  Procédé selon l'une des revendications précédentes, caractérisé en ce que les flux de retour de fluide quittant les différentes zones de température ou les circuits des zones sont rassemblés, en fonction de leur température et/ou de leur quantité, en au moins deux flux de retour principaux séparés dont chaque fois au moins un est refroidi et un autre chauffé.

7.  Procédé selon l'une des revendications précédentes, caractérisé en ce que l'on utilise un fluide avec au moins deux étages de température différents, un étage de température se trouvant à une température inférieure et un étage de température à une température supérieure à la valeur de consigne des zones tempérées par ce fluide, et que les fluides sont mélangés ensemble dans le rapport de mélange désiré avant, de préférence immédiatement avant, leur entrée dans la zone d'extrudeuse concernée, en particulier en ce que l'on utilise un fluide dans lequel la température d'un étage de température diffère de la température de consigne de moins de 5°C, de préférence moins de 3°C, et la température de l'autre étage de température diffère de la température de consigne de préférence d'au moins 30°C, en particulier d'au moins 50°C.

8.  Procédé selon l'une des revendication précédentes, caractérisé en ce que les temps de séjour des partenaires réactionnels dans les différentes zones de température sont maintenus différents, et qu'ils sont de préférence moindres dans les zones où un important échange de chaleur nécessaire.

9.  Installation pour l'exécution du procédé selon l'une des revendications précédentes, avec au moins une extrudeuse à plusieurs vis (12), un carter composé de plusieurs parties (11) et d'un entraînement pour les vis (14, 15), au moins quelques parties (11) comportant des conduits de fluide (82) présentant une entrée (22) et une sortie (23) et étant pourvus de dispositifs d'équilibrage de température indépendants l'un de l'autre, et un dispositif d'extraction des composants volatils étant prévu en au moins un endroit, installation caractérisée en ce qu'elle présente deux extrudeuses montées l'une après l'autre en cascade, la première étant aménagée en extrudeuse de réaction pour l'exécution de la polymérisation, et la seconde en extrudeuse de dégazage et de mélange, les deux extrudeuses étant reliées par une conduite pourvue d'un dispositif transporteur d'accumulation, et un dispositif de distillation étant prévu au début de l'extrudeuse de mélange.

10. Installation selon la revendication 9, caractérisée en ce que les vis d'extrudeuse (14, 15) présentent une pente montante variant le long de leur longueur, et variant de préférence de façon discontinue, et possèdent en particulier des corps de mélange et/ou d'accumulation.

11. Installation selon la revendication 9 ou 10, caractérisée en ce qu'au moins une, de préférence chaque partie de carter (11) présente au moins une ouverture supplémentaire prévue pour l'amenée ou le prélèvement de matières et/ou la mesure de pression.

12. Installation selon l'une des revendications 9 à 11, caractérisée en ce qu'il est prévu chaque fois, pour tempérer les parties de carter (11) individuelles, au moins un dispositif de mélange (24, 71, 72; 76, 79; 80; 81) pour différents fluides tempérés, placé de préférence immédiatement avant l'entrée du fluide dans la partie de carter (11), et que le dispositif de mélange pour chaque partie de carter (11) présente en particulier au moins une servo-vanne (24; 71, 72; 76, 79; 80; 81) avec un rapport de mélange variable de préférence en continu.

13. Installation selon l'une des revendications 9 à 12, caractérisée en ce que le dispositif d'équilibrage de température (24; 71, 72; 76, 79; 80; 81) de chaque zone peut être influencé par au moins une sonde de température (83 à 86) via une commande électronique (91) pour régler la température dans la partie de carter concernée, et qu'il est prévu au moins une sonde de température (85) pour la mesure de la température dans la partie de carter (11), disposée dans cette partie, de préférence à faible distance du cylindre intérieur (13), une sonde de température (83) pour la mesure de la température du fluide à l'entrée (22) dans la partie de carter (11), une sonde de température (84) pour la mesure de la température du fluide à la sortie (23) de la partie de carter (11) et/ou une sonde de température (86) pour la mesure de température de la matière synthétique dans le cylindre d'extrudeuse (13).

14. Installation selon l'une des revendications 9 à 13, caractérisée en ce qu'il est prévu pour l'équilibrage de température des parties de carter avec le fluide, au moins un circuit principal (28, 29) avec une pompe (59, 34) et de préférence chaque fois au moins une dérivation secondaire (62, 51).

15. Installation selon l'une des revendications 9 à 14, caractérisée en ce que chaque partie de carter possède en substance un circuit secondaire propre, de préférence pourvu d'une pompe (78), communiquant avec au moins un circuit principal (28, 29) par l'intermédiaire du dispositif de mélange (71, 72; 76, 79; 80; 81).

16. Installation selon la revendication 15, caractérisée en ce que les pompes (78) des circuits secondaires (77) sont pourvues d'un entraînement commun.

17. Installation selon l'une des revendications 14 à 16, caractérisée en ce qu'au moins le circuit (28) pour la température supérieure présente un dispositif de chauffage (56), de préférence électrique séparé localement de l'extrudeuse et comportant un réglage de température, et que le refroidissement du fluide se fait par au moins un échangeur de chaleur (43) disposé dans un circuit principal de refroidissement (29) et/ou dans une section en parallèle, réglable, de la canalisation des circuits secondaires (77).

18. Installation selon l'une des revendications 9 à 17, caractérisée en ce que les sorties de fluide (23) de plusieurs, de préférence de toutes les parties de carter (11), ou les sorties des circuits secondaires (77), débouchent dans une canalisation de retour commune (64).

19. Installation selon l'une des revendications 9 à 18, caractérisée en ce qu'il est affecté à l'extrudeuse au moins un dispositif de dosage à débit de dosage variable, de préférence au moins deux pompes doseuses à course réglable, avec un entraînement réglable commun.

FIG. 1

FIG. 2

17

EP 0 143 894 B1

FIG.3

FIG.4

FIG.5

FIG.6

18